# EUROPÄISCHE PATENTANMELDUNG

(11) **EP 1 103 809 A1**
(43) Veröffentlichungstag der Anmeldung: **30.05.2001**
(21) Anmeldenummer: 00124912.7
(22) Anmeldetag: 15.11.2000
(51) Int. Cl.: G01N 27/414

(54) **Gassensor**

(30) Priorität: 25.11.1999 DE 19956744
(71) Anmelder: SIEMENS AKTIENGESELLSCHAFT, 80333 München (DE)
(72) Erfinder: Daeche, Frank, Dr., 81825 München (DE); Fleischer, Maximilian, Dr., 85635 Höhenkirchen (DE); Lampe, Uwe, Dr., 21614 Buxtehude (DE); Meixner, Hans, Prof., 85540 Haar (DE); Ostrick, Bernhard, 81541 München (DE)

(57) **Zusammenfassung**

Es wird ein Gassensor zur Detektion von Gasen nach dem Prinzip der Austrittsarbeitsmessung vorgestellt. Der eingesetzte Feldeffekttransistor wird in Flip-Chip-Technologie auf einem Keramiksubstrat (1) montiert, wobei das Halbleiterbauelement (5) direkt auf der gassensitiven Schicht (2) aufsitzt. Als Abstandhalter dient eine im Bereich des Kanals des Feldeffekttransistors mit einer Öffnung versehene Passivierungsschicht (6) mit definierter Stärke.

## Beschreibung

Die Erfindung betrifft einen Gassensor, der durch mindestens einen Feldeffekttransistor dargestellt wird, bestehend aus Bereichen für Source, Drain und Kanal (Emitter, Kollektor und Kanal). Eine auf einem Substrat befindliche Gate-Elektrode weist eine gassensitive Schicht auf und ist mit einem Halbleiterbauelement, das den Feldeffekttransistor enthält, zusammengefügt. Weiterhin ist beispielsweise ein Gaskanal vorgesehen, um das zu analysierende Gas an die gassensitive Schicht zu führen.

Gassensoren, die nach dem Prinzip der Austrittsarbeitsmessung funktionieren, sind seit kurzer Zeit bekannt. Diese neuen Gassensoren, die sich vor allem dadurch auszeichnen, daß sie bei niedriger Betriebstemperatur von ca. 10°C bis maximal 120°C arbeiten und somit einen geringen Energieverbrauch von weniger als beispielsweise 100 mW aufweisen, stellen eine wesentliche Weiterentwicklung bisheriger Gassensor dar. Sie sind durch ein großes Spektrum nachweisbarer Gase gekennzeichnet.

Das physikalische Meßprinzip für die neuen Gassensoren ist die Messung der Änderung der Austragsarbeit bei der Wechselwirkung von gassensitiven Materialien mit Gasen. Durch die Verwendung der Meßgröße Austrittsarbeit ist neben der Senkung des Energieverbrauches auch eine deutliche Vereinfachung der Materialpräparation gegeben. Da durch die Auswertung einer reinen Oberflächeneigenschaft keine, im allgemeinen schwierig zu reproduzierenden, Abhängigkeiten von Korngrenzen und Elektrodenkontakten vorliegen, wie dies beispielsweise bei der Messung von Leitfähigkeiten der Fall ist, sind deutliche Verbesserungen der Reproduzierbarkeit der Sensorsignale möglich.

Ein Gassensorsystem nach dem Prinzip der Austrittsarbeit wird in der Regel durch den Einsatz von Feldeffekttransistoren realisiert. Eine Änderung der Austrittsarbeit an der gassensitiven Beschichtung des Gates des Transistors ruft dabei eine Änderung der Einsatzspannung des Transistors hervor. Diese Änderung der Einsatzspannung ist letztlich die gemessene elektrische Größe. Hierzu ist ein Aufbau notwendig, der in geeigneter Form die Änderung der Austrittsarbeit eines Detektionsmaterials in den Kanal eines Transistors einkoppelt.

Zur Realisierung dieses Meßprinzips ist beispielsweise die direkte Beschichtung des Gates mit wasserstoffpermeablem Palladium eingesetzt worden. Diese Lösung ist im wesentlichen nur zur Wasserstoffdetektion einsetzbar und benötigt zur Aktivierung der Diffusion Energie, erlaubt also keinen Betrieb bei niedriger Leistung. Weiterhin sind sogenannte Gas-Feldeffekttransistoren (GasFET) mit Luftspalt zwischen sensitivem Material und Gate bekannt (Suspended Gate Feldeffekttransistor, SGFET). In dieser Technologie wird jedoch die Silizium-Ätztechnologie mittels einer Spacerschicht (Abstandsschicht) verwendet, die zu einem monolithisch hergestellten Aufbau führt. Umfangreiche bisherige Untersuchungen zeigten jedoch, daß die meisten der sensitiven Schichten bei diesem Aufbau während des Freiätzens des Luftspaltes beschädigt wurden. Mit diesem Aufbau ist daher keine Freiheit bei der Wahl der Detektionsschicht gegeben.

Hybrid aufgebaute Transistoren werden als SGFET oder als Capacitive Controlled FET dargestellt. Dabei ist zwar durch den hybriden Aufbau die Möglichkeit gegeben, das Gate mit einer beliebigen Schicht zu versehen, wobei jedoch bisher keine realisierbaren Aufbauten mit entsprechender Verbindungstechnologie bekannt sind. Ausgegangen wird in der Regel von mikromechanisch hergestellten Siliziumteilen, die manuell zusammengebaut werden.

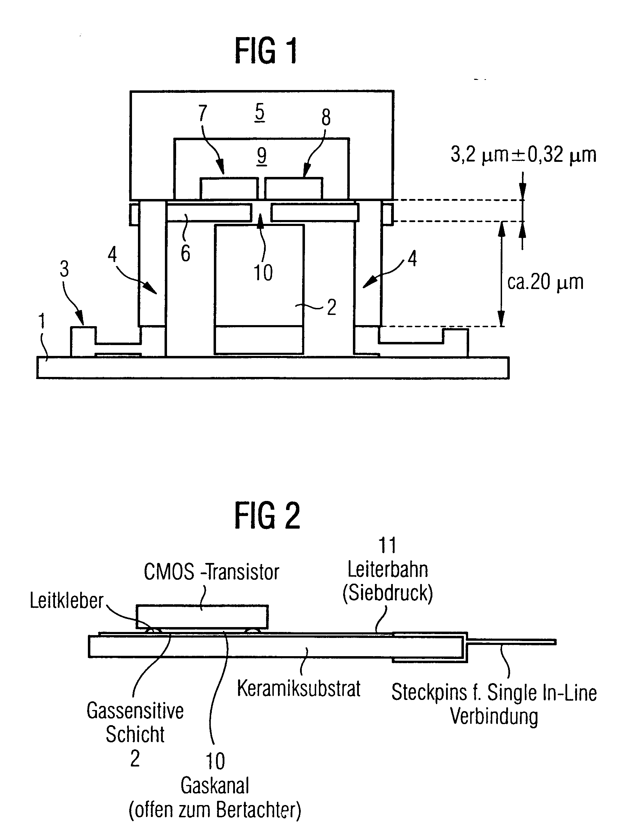

Das Grundkonzept eines industriell fertigbaren hybriden, insbesondere mit Keramik und Silizium realisierten, Flip-Chip-Aufbaus gibt die deutsche Patentanmeldung mit der amtlichen Anmeldenummer P 198 14 857.7 wieder. Der hier gezeigte hybride Flip-Chip im Aufbau stellt eine kostengünstige Realisierung eines Gassensors nach dem Prinzip der Austrittsarbeitsmessung dar. Dieser Stand der Technik wird in Verbindung mit der Figur 2 näher erläutert.

In Figur 2 ist ein Keramiksubstrat dargestellt, das nach außen hin über Steckpins kontaktierbar ist. Auf dem Keramiksubstrat verlaufen Leiterbahnen, die in der Regel durch Siebdruck hergestellt sind. Das Keramiksubstrat trägt eine gassensitive Schicht, die integraler Bestandteil der Gate-Elektrode ist. Das Keramiksubstrat dient als Träger für einen in Flip-Chip-Technik aufgebrachten CMOS-Transistor. Dieser wird mit seiner Frontseite, also umgedreht zur üblichen Montage, mittels Leitkleber auf dem Keramiksubstrat montiert. Die in diesem Halbleiterbauelement vorhandenen Bestandteile des Feldeffekttransistors, der Source-, der Drain- und der Kanalbereich bilden zusammen mit dem in der Seitenansicht sichtbaren Gaskanal insgesamt das System des GasFETs. Mit dem in Figur 2 dargestellten Design eines gassensitiven Feldeffekttransistors läßt sich jedoch keine funktionsfähige Ausführung realisieren. Der in der Regel notwendige Gaskanal kann für ein funktionsfähiges System mit diesem Aufbau nicht reproduzierbar im u-Meter-Bereich dargestellt werden.

Der Erfindung liegt somit die Aufgabe zugrunde, einen Gassensor nach dem Prinzip der Austrittsarbeitsmessung zur Verfügung zu stellen, der eine große Freiheit in der Auswahl und Montage der gassensitiven Schichten erlaubt, der ein zuverlässiges Detektionssignal liefert und der kostengünstig herzustellen ist.

Die Lösung dieser Aufgabe geschieht durch die Kombination der Merkmale entsprechend Anspruch 1.

Vorteilhafte Ausgestaltungen können den Unteransprüchen entnommen werden.

Der Erfindung liegt die Erkenntnis zugrunde, daß zur Herstellung von Transistoren mit einer notwendigen Steilheit in ihrer Kennlinie der Abstand zwischen sensitiver Schicht und dem Kanalbereich des Transistors im µ-Meter-Bereich liegen muß. Dabei sollten weiterhin geringe Toleranzwerte eingehalten werden, wie beispielsweise 1µm ± 0,4 µm oder 5 µm ± 1 µm. Dies benötigt äußerst präzise Abstandshalter. Bei hybriden in Flip-Chip-Technik aufgebauten gassensitiven Transistoren stehen als Beschichtungstechnologien für den Keramikteil im wesentlichen Siebdruck oder Spin-Coating-Verfahren zur Verfügung. Daraus läßt sich mit den genannten Vorgaben die Fertigung eines Abstandshalters nicht erfüllen. Wenn berücksichtigt wird, daß eine typische Schichtdicke im Bereich von 10 µm ± 2 µm liegt, ist dies leicht zu erkennen. Dies, insbesondere vor dem Hintergrund, daß die geforderte Gaskanaldimension als Differenz der Abstände zweier Dickschichten erzeugt werden muß. Erfindungsgemäß wird das in Flip-Chip-Technologie auf das Trägersubstrat aufzubringende Halbleiterbauelement modifiziert. Durch die letzte auf dem CMOS-Transistor aufgebrachte Schicht, ausnahmslos eine Passivierungsschicht, wird ein Abstandshalter mit definierter Schichtdicke im gewünschten Bereich hergestellt. Dazu wird die Schicht über dem Kanalbereich des Feldeffekttransistors geöffnet und direkt auf die gassensitive Schicht, die sich auf dem Trägersubstrat befindet, plaziert bzw. bei der Montage angedrückt. Dadurch besteht weitgehende Freiheit bei der Wahl der Präparationstechnik und der Dicke der gassensitiven Schicht.

Das Halbleiterbauelement wird in der Regel ein Silizium-Bauelement sein. Zu dessen oberflächlichen Passivierung werden eine oder mehrere Passivierungsschichten aufgebracht, wobei es vorteilhaft ist, die oberste Schicht aus Siliziumnitrid herzustellen.

Der Kanal eines Feldeffekttransistors ist grundsätzlich durch die damit verbundene Ladungsträgergeneration auch lichtempfindlich. In manchen Anwendungen können daher wechselnde äußere Lichtintensitäten Störsignale auslösen. Es ist daher vorteilhaft, bei der Herstellung des Gaskanals, in der Regel durch einen Ätzvorgang, die Öffnung der Abdeckschicht (Siliziumnitrid) auf dem Silizium-Bauelement im Eingangsbereich mäanderförmig zu strukturieren. Die Gasdiffusion in den Gaskanal ist trotz der mäanderförmigen Ausbildung gegeben, wobei jedoch die geradlinige Ausbreitung des Lichtes behindert wird.

Zur flexiblen Herstellung der Flip-Chip-Verbindung ist der Einsatz von leitfähigen Polymeren zur Befestigung des Halbleiterbauelementes auf einem Substrat vorteilhaft. Die dabei herzustellenden Polymerbumps müssen nicht mit exakt gleicher Höhe hergestellt werden, da sie bei der Flip-Chip-Montage im noch nicht ausgehärteten Zustand verformbar sind.

Im folgenden wird anhand der schematischen Figuren ein Ausführungsbeispiel beschrieben.
- Figur 1: zeigt eine geschnittene Seitenansicht eines GasFETs mit einem Abstandshalter und der Darstellung des Gaskanals,
- Figur 2: zeigt den Querschnitt eines Designs eines gassensitiven Feldeffekttransistors in Flip-Chip-Technologie entsprechend dem Stand der Technik.

In Figur 2 ist der prinzipielle Aufbau eines GasFETs dargestellt, wobei einerseits das Keramiksubstrat mit der Gate-Elektrode, in die die gassensitive Schicht integriert ist, vorliegt, und andererseits ein Halbleiterbauelement, insbesondere ein Silizium-Bauelement bzw. ein CMOS-Transistor.

Dieser Transistor wird in Flip-Chip-Technologie auf das Keramiksubstrat elektrisch leitend befestigt (gebondet).

Figur 1 zeigt in einer stark verzerrten seitlichen Schnittdarstellung einen gassensitiven Feldeffekttransistor. Auf einem Substrat 1 ist eine Metallisierung 3, beispielsweise Kontaktpads oder Leiterbahnen aufgebracht, auf die die elektrisch leitenden Flip-Chip-Bonds 4 aufgesetzt sind. Bemaßungen sind der Figur 2 neben entsprechenden Doppelpfeilen zu entnehmen. Zentral ist die gassensitive Schicht 2 mit der Metallisierung 3 verbunden. Das Halbleiterbauelement besteht aus dem Silizium-Bauelement 5, das eine p-Wanne 9 beinhaltet, worin wiederum der Drain-Bereich 7 und der Source-Bereich 8 angesiedelt sind. Zwischen den Bereichen 7, 8 liegt der Kanalbereich des Transistors. Die oberste Passivierungsschicht des Halbleiterbauelementes trägt das Bezugszeichen 6. In dieser, im speziellen durch Siliziumnitrid dargestellten, Passivierungsschicht wird zentral ein Durchbruch herausgearbeitet, so daß der Kanalbereich des Transistors frei liegt. Die Stärke der Isolatorschicht 6 ist gleichzeitig der Abstand zwischen dem Kanalbereich des Feldeffekttransistors und der gassensitiven Schicht. Somit liegt einerseits die gassensitive Schicht direkt auf dem Silizium-Bauelement 5 auf, wird jedoch durch die Isolatorschicht 6 elektrisch getrennt. Die Öffnung bzw. der Durchbruch in der Isolatorschicht 6 stellt den Gaskanal 10 dar, durch den das zu detektierende Gas an die Gate-Elektrode bzw. an die gassensitive Schicht 2 gelangt.

Einige der in der Flip-Chip-Technik üblichen Bondtechniken wie beispielsweise Goldbump, Löttechnik, erlauben entweder keine ausreichende Flexibilität bei der Einstellung des Abstandes oder gasen während des Trocknungsvorganges aus (Lösemitteldämpfe). Dadurch können gassensitive Schichten geschädigt werden. Entsprechend der Erfindung werden beim Fügen der Einzelteile leitfähige Polymerbumps verwendet, insbesondere silbergefülltes Epoxid-Harz. Diese können, solange das Material flexibel ist, ausreichend nachgeben bis das Halbleiterbauelement auf der gassensitiven Schicht aufsitzt. Zum Aushärten benötigen diese Materialien Temperaturen von maximal 100°C. Darüber hinaus treten keinerlei Ausgasungen, beispielsweise von Lösungsmitteln, auf. Ein geeigneter Klebstoff ist beispielsweise ein Zwei-Komponenten-Silberleitkleber.

Die Standardmetallisierung des Silizium-Bauelementes, die in der Regel aus Aluminium besteht, hat normalerweise eine oberflächliche Passivierungsschicht aus Aluminiumoxid. Dieses natürliche Oxid entsteht durch Oxidation an Luft und weist eine Schichtdicke von 50 Å auf. Diese Schicht bildet einen sehr hohen Übergangswiderstand, so daß vor dem Aufbringen des Polymers eine zusätzliche Vorbehandlung der Kontaktpads (Kontaktflecken) erforderlich ist. Für diese Vorbehandlung kann alternativ der naßchemische Zinkat-Prozeß oder ein Dünnschichtprozeß wie beispielsweise Sputtern, benutzt werden. Bei dem Dünnschichtprozeß wird das natürliche Al₂O₃ durch Ionenätzen entfernt. Anschließend werden eine oder zwei Metallschichten als Haftvermittler und Diffusionssperrschicht aufgesputtert. Als Materialien für die Metallschichten sind zu nennen TiN oder WCr oder TiW oder Ti/Pt. Die oberste Schicht, die den Kontakt zum leitfähigen Flip-Chip-bond herstellt, ist in jedem Fall auch bei Anwendung des Zinkat-Prozesses eine Goldschicht. Das Polymer wird anschließend durch Schablonendruck aufgebracht und die Polymerisation erfolgt durch Trocknen bei ca. 120°C. Auf den Goldkontakten des Keramikteils wird ebenfalls das Polymer durch Schablonendruck aufgebracht, jedoch werden diese Bumps nicht ausgehärtet. Alternativ ist das Aufdrucken des Polymers nur auf dem Silizium-Bauelement oder nur auf dem Keramiksubstrat ohne anschließendes Aushärten möglich. Die endgültige Herstellung der Verbindung zwischen Silizium-Bauelement und Keramiksubstrat erfolgt dann innerhalb der Topfzeit des Polymers unter erhöhter Temperatur und mechanischen Druck mit einem speziellem Flip-Chip-Bonder. Dabei wird das Polymer endgültig ausgehärtet. Alle diese Prozeßschritte lassen sich im Labormaßstab wie auch im Produktionsmaßstab mit halb- und vollautomatischen Anlagen durchführen. Zur Herstellung der Metallisierung der Bumps sind folgende Dünnschicht-Prozeßschritte möglich:
- Ionenätzen zum Abtragen des natürlichen Aluminiumoxids,
- Titandünnschicht als Haftvermittler, Stärke beispielsweise 75 nm,
- Platindünnschicht als Diffusionssperrschicht, Stärke beispielsweise 75 nm,
- Golddünnschicht als Kontaktschicht, Stärke beispielsweise 150 nm.

Die Strukturierung erfolgt mit Hilfe des Lift-Off-Verfahrens.

Der Flip-Chip-Bond aus leitfähigem Polymer kann folgende wichtige Vorteile erzielen:
- Die Prozeßtemperatur beim Flip-Chip-Bonden kann relativ niedrig gehalten werden, so daß auch der Einsatz von temperaturempfindlichen, gassensitiven Schichten 2 möglich ist.
- Es werden keine Lösungsmittel frei und keine Lötflußmittel benötigt wie sie beim Standardverfahren des Weichlötens erforderlich sind. Lötflußmittel können die gassensitiven Schichten sehr leicht schädigen.
- Durch einen Schablonendruck lassen sich relativ leicht Bumps erzeugen, die eine konforme Höhenverteilung aufweisen. Dies ist wichtig, um ein gleichmäßiges Aufsetzen des Silizium-Bauelementes auf die gassensitive Schicht zu gewährleisten.

Falls als gassensitive Schicht eine besonders fließfähige Substanz verwendet werden soll, kann es sein, daß die beim Fügeprozeß auftretenden Kräfte bei einem Fließen des Sensormateriales in den freizuhaltenden Gaskanal führen. In diesem Fall kann es nötig sein, neben der gassensitiven Schicht eine weitere Substanz auf das Keramiksubstrat aufzubringen , auf welche dann der Abstandshalter, die Isolatorschicht 6, aufliegt. In diesem Fall muß eine Schichtdicke der sensitiven Schicht minimal kleiner sein als die Schichtdicke der Abstandshalterschicht.

## Patentansprüche

1. Gassensor (A), dargestellt durch mindestens einen Feldeffekttransistor mit Source-, Drain- und Kanalbereich in einem Halbleiterbauelement und einer Gate-Elektrode auf einem Substrat (1), in die eine gassensitive.Schicht (2) integriert ist, wobei das Halbleiterbauelement mit einer Isolatorschicht (6) direkt auf der gassensitiven Schicht aufliegt, ein Gaskanal (10) mittels einer Öffnung in der Isolatorschicht (6) dargestellt ist und der Abstand zwischen Kanalbereich und gassensitiver Schicht durch die Schichtdicke der Isolatorschicht (10) gegeben ist.

2. Gassensor nach Anspruch 1, wobei die Isolatorschicht aus - Siliziumnitrid oder Borosilikatglas besteht.

3. Gassensor nach einem der vorhergehenden Ansprüche, wobei das Halbleiterbauelement ein Silizium-Bauelement ist.

4. Gassensor nach einem der vorhergehenden Ansprüche, wobei der Gaskanal (10) in seinem Eingangsbereich mäanderförmig ausgebildet ist.

5. Gassensor nach einem der vorhergehenden Ansprüche, wobei Flip-Chip-Bonds zur Befestigung des Halbleiterbauelementes auf dem Substrat (1) aus einem leitfähigen Polymer bestehen.

6. Gassensor nach Anspruch 5, wobei das Polymer ein Zwei-Komponenten-Silberleitklebstoff ist.

7. Gassensor nach Anspruch 6, wobei der Zwei-Komponenten-Silberleitklebstoff ein silbergefülltes Epoxidharz ist.

8. Gassensor nach einem der vorhergehenden Ansprüche, wobei Kontaktpads am Halbleiterbauelement eine oberflächliche Goldschicht aufweisen.

9. Gassensor nach einem der vorhergehenden Ansprüche, wobei die Betriebstemperatur bei maximal 120 °C liegt.

10. Gassensor nach einem der vorhergehenden Ansprüche, wobei die Leistungsaufnahme maximal 100 mW beträgt.

11. Gassensor nach einem der vorhergehenden Ansprüche, wobei die Schichtdicke der Isolatorschicht zwischen 1 und 5 µm beträgt, mit Toleranzen von +/- o,4 bis +/- 1 µm.
